(19) Europäisches Patentamt
European Patent Office
Office européen des brevets

(11) **EP 4 362 175 B1**

(12) **EUROPEAN PATENT SPECIFICATION**

(45) Date of publication and mention
of the grant of the patent:
**22.07.2026 Bulletin 2026/30**

(21) Application number: **22828464.2**

(22) Date of filing: **22.06.2022**

(51) International Patent Classification (IPC):
*H01M 50/105* (2021.01)    *H01M 50/121* (2021.01)
*H01M 50/129* (2021.01)

(52) Cooperative Patent Classification (CPC):
**H01M 50/105; B32B 7/12; H01M 50/121;**
**H01M 50/124; H01M 50/129; H01M 50/133;**
B32B 2439/00; B32B 2457/10; B32B 2553/00;
Y02E 60/10

(86) International application number:
**PCT/JP2022/024932**

(87) International publication number:
**WO 2022/270548 (29.12.2022 Gazette 2022/52)**

(54) **EXTERIOR MATERIAL FOR POWER STORAGE DEVICE**

AUSSENMATERIAL FÜR EINE ENERGIESPEICHERVORRICHTUNG

MATÉRIAU EXTÉRIEUR POUR DISPOSITIF DE STOCKAGE D'ÉNERGIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.06.2021   JP 2021104921**

(43) Date of publication of application:
**01.05.2024   Bulletin 2024/18**

(73) Proprietor: **TOPPAN INC.**
**Tokyo 110-0016 (JP)**

(72) Inventor: **NUMAZAWA, Taketo**
**Tokyo 110-0016 (JP)**

(74) Representative: **Hoffmann Eitle**
**Patent- und Rechtsanwälte PartmbB**
**Arabellastraße 30**
**81925 München (DE)**

(56) References cited:
JP-A- 2013 218 990      JP-A- 2016 124 877
JP-A- 2017 071 414      JP-A- 2019 051 634
KR-A- 20160 130 240

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present disclosure relates to packaging materials for power storage devices.

[Background Art]

Power storage devices include, for example, secondary batteries such as lithium ion batteries, nickel hydride batteries, and lead batteries, and electrochemical capacitors such as electric double layer capacitors. Due to miniaturization of mobile devices, limitation of installation spaces, or the like, power storage devices are required to be further miniaturized, and thus attention is being given to lithium ion batteries for their high energy density. As packaging materials for lithium ion batteries, there is a growing trend of using multilayer films for their light weight, high heat dissipation, and low-cost producibility.

Lithium ion batteries using the above multilayer films as packaging materials are referred to as laminated lithium ion batteries. The packaging materials cover the battery contents (positive electrode, separator, negative electrode, electrolyte, and the like) and prevent entry of moisture into the interior. Laminated lithium ion batteries are each produced by, for example, forming a recess in a part of a packaging material by cold forming, accommodating battery contents in the recess, folding back the remaining part of the packaging material, and sealing the edges by heat sealing (e.g., see PTL 1).

A lithium battery packaging material according to the preamble of the appended claim 1 is described in PTL 2.

[Citation List]

[Patent Literature]

PTL 1: JP 2013-101765 A
PTL 2: KR 2016 0130240 A (EP 3 116 044 A1)

[Summary of the Invention]

[Technical Problem]

Power storage devices, which are referred to as solid-state batteries, are under research and development as next generation batteries replacing lithium ion batteries. Solid-state batteries are characterized by use of a solid electrolyte as an electrolytic substance, without using an organic electrolyte solution. Lithium ion batteries cannot be used under temperature conditions higher than the boiling point of their electrolytic solutions (about 80°C), whereas solid-state batteries can be used under temperature conditions higher than 100°C, and can enhance conductivity of the lithium ions when the batteries are used under high temperature conditions (e.g., 100°C to 150°C).

However, if a laminated solid-state battery is produced using the above laminate as a packaging material, sealing performance of the package of the solid-state battery may become insufficient due to the occurrence of delamination between the layers (between the substrate layer or sealant layer and the barrier layer, in particular) of the packaging material, which is due to insufficient heat resistance of the packaging material.

In addition, when forming a deep recess in the packaging material during production of the laminated solid-state battery, damage may occur to the packaging material.

Aspects of the present disclosure have been made in light of the above issues and aim to provide a packaging material having good heat resistance and deep drawability.

[Solution to Problem]

An aspect of the present disclosure is a packaging material for a power storage device, including a laminate structure that includes a substrate layer, a first adhesive layer, a barrier layer, a second adhesive layer, and a sealant layer, in this order, wherein at least one of the first adhesive layer and the second adhesive layer contains a urethane compound or a urea compound; the urethane compound is a reaction product of a polyol resin with a polyfunctional isocyanate compound; the urea compound is a reaction product of a polyfunctional isocyanate compound with at least one of an amine compound and an amine derivative; and in a layer containing the urethane compound or the urea compound among the first adhesive layer and the second adhesive layer, when a peak intensity of infrared absorption spectrum at 1,700 to 1,800

$cm^{-1}$ measured using infrared spectroscopy is represented by A, and a peak intensity of infrared absorption spectrum at 1,600 to 1,660 $cm^{-1}$ measured using infrared spectroscopy is represented by B, a value X that is defined by the following Formula (1) satisfies a relationship $0.1 \leq X \leq 7.0$

$$X = \{B/(A+B)\} \times 100 \qquad \ldots (1)$$

The above packaging material has good heat resistance and formability. The present inventor considers the reasons why the above effects can be obtained to be as follows. Specifically, urea groups contained in urea compounds generally have high cohesive energy. Therefore, adhesive layers containing urea compounds are less likely to suffer cohesive failure even when stresses are applied thereto in high temperature environments or during forming.

Also, urea groups have active hydrogens. Active hydrogens establish hydrogen bonds at an interface between an adhesive layer containing a urea compound and a surface to be adhered thereto. Due to the hydrogen bonds established, adhesion at the interface is enhanced. Therefore, the adhesive layer becomes less likely to peel off even when a stress is applied thereto in high temperature environments or during forming.

In addition, if the adhesive layer further contains a urethane compound having a higher flexibility than urea compounds and having relatively high heat resistance, the adhesive layer can be imparted with flexibility. The adhesive layer imparted with flexibility can relieve the stress caused by thermal contraction or the like of the substrate layer in high temperature environments or the stress caused during forming. Therefore, cohesive failure of the adhesive layer can be suppressed.

Furthermore, if a value X, which is calculated from a peak intensity of infrared absorption spectrum at 1,700 to 1,800 $cm^{-1}$ derived from carbonyl groups of the urethane compound and a peak intensity of infrared absorption spectrum at 1,600 to 1,660 $cm^{-1}$ derived from urea groups of the urea compound, is 0.1 or more, the urea groups of the urea compound show greater cohesion. Therefore, the adhesive layer becomes even less likely to suffer cohesive failure and becomes even less likely to peel off. If the value X is 7 or less, excessive curing of the adhesive layer is suppressed. Accordingly, high flexibility is imparted to the adhesive layer which, in turn, can relieve greater stresses applied thereto. Consequently, the above packaging material achieves good heat resistance and deep drawability.

The above packaging material also achieves good initial adhesion.

In an aspect, the amine compound or the amine derivative may contain a latent curing agent.

In an aspect, when the number of hydroxyl groups contained in the polyol resin is represented by C, the number of isocyanate groups contained in the polyfunctional isocyanate compound is represented by D, and the number of nitrogen atoms contained in the amine compound or the amine derivative and reacting with isocyanate groups to establish urea bonds is represented by E, a value Y defined by the following Formula (2) may satisfy a relationship $5.0 < Y < 60$, and a value Z defined by the following Formula (3) may satisfy a relationship $0.1 \leq Z \leq 10.0$.

$$Y = D/C \qquad \ldots (2)$$

$$Z = E/(D-C) \qquad \ldots (3)$$

If the value Y exceeds 5.0, the number of isocyanate groups reacting with the amine compound or the amine derivative becomes sufficient. If the value Y is less than 60, voids that could be produced due to reaction of the amine compound or the amine derivative with the polyfunctional isocyanate compound can be suppressed, and thus poor curing can be suppressed. If the value Z is 0.1 or greater, the rate of reaction of the amine compound or the amine derivative with the polyfunctional isocyanate compound can be improved, and the ratio of the urea compound present in the adhesive layer increases. If a predetermined amount of unreacted amine compound or amine derivative remains in the adhesive layer, polar functional groups, such as active hydrogen, in the unreacted amine compound or amine derivative tend to bring about intermolecular interactions, such as formation of hydrogen bonds, with polar functional groups in the adhesive layer, which tends to improve adhesion. If the value Z is 10.0 or less, unreacted amine compound or amine derivative can be prevented from remaining in the adhesive layer by an amount causing poor adhesion that could be the cause of deteriorating heat resistance and formability. Consequently, the above packaging material achieves even better initial adhesion, heat resistance, and forming reliability.

In an aspect, the polyol resin may be at least one polyol selected from the group consisting of polyester polyols and polycarbonate diols. Consequently, the above packaging material achieves even better heat resistance and deep drawability.

In an aspect, the polyfunctional isocyanate compound may be at least one material selected from the group consisting of multimers of alicyclic polyfunctional isocyanate compounds and multimers of polyfunctional isocyanate compounds with aromatic rings. Consequently, the above packaging material achieves even better initial adhesion, heat resistance, and deep drawability.

The reason why such effects are achieved is considered to be because if a multimer of an alicyclic polyfunctional isocyanate compound is used as the polyfunctional isocyanate compound, bonds between the molecular chains become less likely to be unbound even in high temperature environments, due to the bulky molecular structure of the multimer. Also, another reason is considered to be because if a multimer of a polyfunctional isocyanate compound with aromatic rings is used as the polyfunctional isocyanate compound, intermolecular interactions occur which are derived from the aromatic rings, in addition to the multimer having relatively better heat resistance.

In another aspect of the present disclosure, the packaging material may be for use in a solid-state battery. The packaging material according to an aspect of the present disclosure has good heat resistance and deep drawability and thus is suitable for use in a solid-state battery.

[Advantageous Effects of the Invention]

According to an aspect of the present disclosure, a packaging material having good heat resistance and deep drawability can be provided.

[Brief Description of the Drawings]

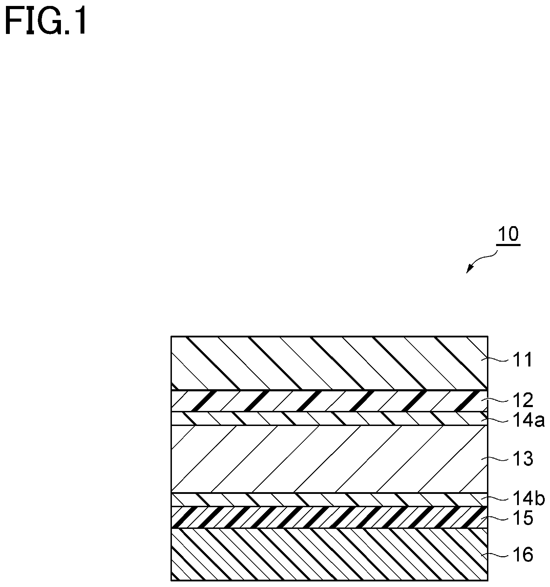

Fig. 1 is a schematic cross-sectional view illustrating a packaging material for a power storage device, according to an embodiment of the present disclosure.

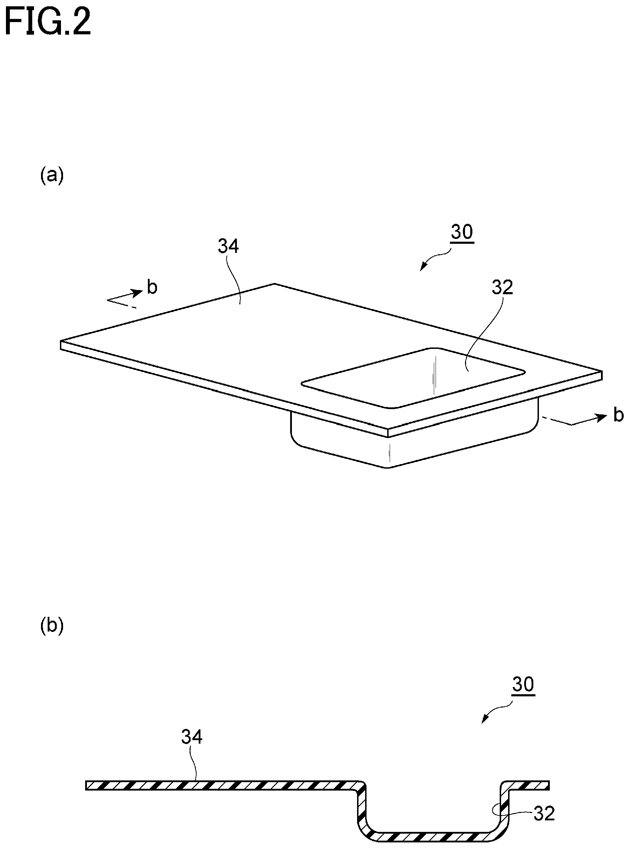

Fig.2 is a set of diagrams illustrating an embossed packaging material obtained using the packaging material for a power storage device according to an embodiment of the present invention, with (a) being a perspective view of the embossed packaging material, and (b) being a vertical cross-sectional view of the embossed packaging material shown in (a) taken along the line b-b.

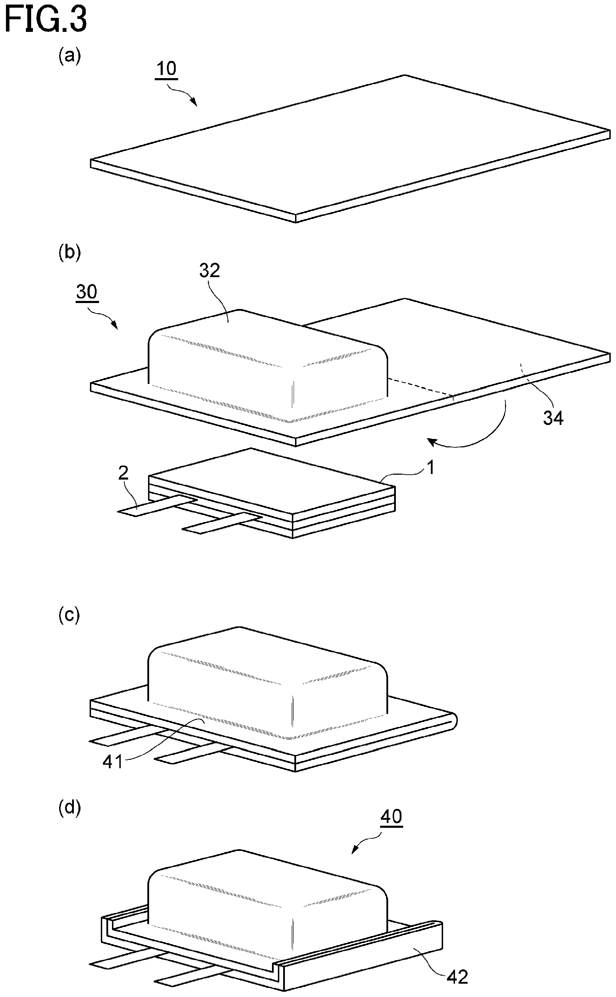

Fig.3 is a set of perspective views illustrating a process of producing a secondary battery using the packaging material for a power storage device according to an embodiment of the present invention, with (a) showing the packaging material for a power storage device, (b) showing the packaging material for a power storage device, which has been embossed, and a battery element, (c) showing the packaging material for a power storage device, which has been folded with edge portions being heat-sealed, and (d) showing the packaging material for a power storage device, with both sides of the fold being turned up.

[Description of the Embodiments]

With reference to the drawings, preferred embodiments of the present disclosure will be described in detail. It should be noted that, in the drawings, like or corresponding parts are designated with like reference signs to avoid duplicate description.

[Packaging material for power storage device]

Fig.1 is a schematic cross-sectional view illustrating an embodiment of a packaging material for a power storage device, according to the present disclosure. As shown in Fig.1, a packaging material (packaging material for a power storage device) 10 of the present embodiment is a laminate including a substrate layer 11, a first adhesive layer 12 provided to one surface of the substrate layer 11, a barrier layer 13 provided to a surface of the first adhesive layer 12 facing away from the surface provided with the substrate layer 11 and having anticorrosion treatment layers 14a and 14b on respective surfaces thereof, a second adhesive layer 15 provided to a surface of the barrier layer 13 facing away from the surface provided with the first adhesive layer 12, and a sealant layer 16 provided to a surface of the second adhesive layer 15 facing away from the surface provided with the barrier layer 13. The anticorrosion treatment layer 14a is provided to the first adhesive layer 12 side surface of the barrier layer 13, and the anticorrosion treatment layer 14b is provided to the second adhesive layer 15 side surface of the barrier layer 13. In the packaging material 10, the substrate layer 11 is the outermost layer and the sealant layer 16 is the innermost layer. Specifically, the packaging material 10 is used, with the substrate layer 11 being on an exterior side of the power storage device and with the sealant layer 16 being on an interior side of the power storage device. The individual layers will be described below.

<Substrate layer 11>

The substrate layer 11 imparts heat resistance to the packaging material during a sealing process in the production of a power storage device, and suppresses formation of pinholes that may occur during forming or distribution. Particularly, in the case of packaging materials used for large power storage devices, scratch resistance, chemical resistance, insulating properties, and the like, can also be imparted.

The substrate layer 11 is preferred to have a peak melting temperature higher than that of the sealant layer 16. If the substrate layer 11 has a peak melting temperature higher than that of the sealant layer 16, the appearance of the packaging material is prevented from being impaired due to melting of the substrate layer 11 (exterior layer) when heat-sealed. If the sealant layer 16 has a multilayer structure, the peak melting temperature of the sealant layer 16 refers to the peak melting temperature of the layer having a highest peak melting temperature. The substrate layer 11 is preferred to have a peak melting temperature of 290°C or more, and more preferably 290 to 350°C. Resin films that can be used for the substrate layer 11 and have peak melting temperatures in the above range may include nylon films, PET films, polyamide films, polyphenylene sulfide films (PPS films), polyimide films, polyester films, and the like. The peak melting point refers to a value obtained according to the method described in JIS K7121-1987.

The substrate layer 11 may be formed using a commercially available film, or may be formed using a coating film (obtained by applying and drying a coating liquid). The substrate layer 11 may have a single-layer structure or a multilayer structure, and may be formed by applying thermosetting resin(s). The substrate layer 11 may contain, for example, various additives (e.g., flame retarders, slip agents, antiblocking agents, antioxidants, light stabilizers, and tackifiers).

When the peak melting temperature of the substrate layer 11 is expressed as $T_{11}$ and that of the sealant layer 16 is expressed as $T_{16}$, the difference therebetween ($T_{11}$-$T_{16}$) is preferred to be 20°C or more. If the temperature difference is 20°C or more, the appearance of the packaging material 10 is even more sufficiently prevented from being impaired due to heat sealing. The substrate layer 11 is preferred to have a thickness of 5 $\mu$m to 50 $\mu$m, and more preferably 12 $\mu$m to 30 $\mu$m.

<First adhesive layer 12 and second adhesive layer 15>

The first adhesive layer 12 and the second adhesive layer 15 will be described in detail.

(First adhesive layer 12)

The first adhesive layer 12 adheres the barrier layer 13 provided with the anticorrosion treatment layer 14a to the substrate layer 11. The first adhesive layer 12 has an adhesive strength required for firmly adhering the substrate layer 11 and the barrier layer 13 together, and also has conformability for preventing the barrier layer 13 from being damaged by the substrate layer 11 during forming. The term conformability refers to the properties that the first adhesive layer 12 remains on the material member without being peeled off even when the material member is deformed due to expansion and contraction or the like.

Examples of adhesive components forming the first adhesive layer 12 include urethane compounds, urea compounds, epoxy compounds, silicon compounds, and inorganic oxides such as aluminum oxide and silica. These compounds may be used singly or in combination of two or more. The urea compounds can be obtained by reacting amine compounds or amine derivatives with polyfunctional isocyanate compounds. The urethane compounds can be obtained by reacting polyol resins with polyfunctional isocyanate compounds.

The amine compounds have amino groups in the molecule. The amino groups refer to - $NH_2$, -NHR and -$NR_2$. R herein represents alkyl groups or aryl groups. The amine derivatives are derived from amine compounds and have no amino groups in the molecule.

The amine compounds or the amine derivatives may be overt curing agents or may be latent curing agents. Being activated by external stimuli, latent curing agents produce reactive groups that can react with isocyanate groups. If the amine compounds or the amine derivatives are latent curing agents, pot life tends to improve. The external stimuli may, for example, be heat and moisture. Examples of latent curing agents include imidazole curing agents, imine curing agents, amine-imide curing agents, dicyandiamide curing agents, aromatic polyamine curing agents, aliphatic polyamine curing agents, polyamide-amine curing agents, tertiary amine salt curing agents, and oxazolidine curing agents. Of these agents, latent curing agents activated by heating may be, for example, imidazole curing agents, dicyandiamide curing agents, polyamine curing agents, and amine-imide curing agents. Latent curing agents activated by moisture may be, for example, imine curing agents and oxazolidine curing agents. The latent curing agents are preferred to be those which are activated by moisture because such curing agents tend to further improve pot life.

Examples of the polyol resins include polyester polyols, polyether polyols, polycarbonate diols, and polyacrylic polyols.

Examples of the polyester polyols include those which are obtained by reacting one or more dicarboxylic acids with a diol.

Examples of the polyether polyols include those which are produced by addition of ethylene oxide or propylene oxide to, or polymerization of these materials with, propylene glycol, glycerin, pentaerythritol, and the like.

Examples of the polycarbonate polyols include those which are obtained by reacting carbonic acid diesters such as diphenyl carbonate with a diol.

Examples of the polyacrylic polyols include copolymers obtained by copolymerizing at least hydroxyl group-containing acrylic monomers with (meth)acrylic acid. In this case, a structural unit derived from (meth)acrylic acid is preferred to be contained as a main component. Examples of the hydroxyl group-containing acrylic monomers include 2-hydroxyethyl (meth)acrylate, and 2-hydroxypropyl (meth)acrylate.

The polyfunctional isocyanate compounds contain multiple isocyanate groups and are responsible for crosslinking the above amine resins or polyols. These polyfunctional isocyanate compounds may be used singly or in combination of two or more. Examples of the polyfunctional isocyanate compounds include aliphatic polyfunctional isocyanate compounds, alicyclic polyfunctional isocyanate compounds, and polyfunctional isocyanate compounds with aromatic rings.

Examples of the aliphatic polyfunctional isocyanate compounds include hexamethylene diisocyanate (HDI), and xylylene diisocyanate (XDI). The alicyclic polyfunctional isocyanate compounds include isophorone diisocyanate (IPDI. The polyfunctional isocyanate compounds with aromatic rings include tolylene diisocyanate (TDI) and diphenylmethane diisocyanate (MDI). As the polyfunctional isocyanate compounds, multimers (e.g., trimers) of these compounds can be used and, specifically, adducts, biurets, isocyanurates, and the like can be used.

From the perspective of improving pot life, the polyfunctional isocyanate compounds may have isocyanate groups bonded to a blocking agent. Examples of the blocking agent include methyl ethyl ketoxime (MEKO). The temperature at which the blocking agent is desorbed from the isocyanate groups of the polyfunctional isocyanate compounds is preferred to be 50°C or more, or is more preferred to be 60°C or more from the perspective of further improving pot life. The temperature at which the blocking agent is desorbed from the isocyanate groups of the polyfunctional isocyanate compounds is preferred to be 140°C or less, or is more preferred to be 120°C or less from the perspective of improving curl resistance when the packaging material is formed.

In order to lower dissociation temperature of the blocking agent, a catalyst for lowering dissociation temperature may be used. Examples of such a catalyst for lowering dissociation temperature include tertiary amines such as triethylenediamine and N-methylmorpholine, and metal organic acid salts such as dibutyltin dilaurate.

The first adhesive layer 12 may contain a hydrogen sulfide adsorbent which is able to suppress corrosion of the barrier layer 13 caused by hydrogen sulfide present outside the packaging material. Examples of such a hydrogen sulfide adsorbent include zinc oxide and potassium permanganate. If the first adhesive layer 12 contains a hydrogen sulfide adsorbent, the barrier layer 13 can be prevented from corrosion due to hydrogen sulfide present outside the packaging material, and the content thereof is preferred to be 1 to 50 mass% with respect to the total mass of the first adhesive layer 12.

From the perspective of obtaining desired adhesive strength, conformability, processability, and the like, the thickness of the first adhesive layer 12 is preferred to be 1 $\mu$m to 10 $\mu$m, and is more preferred to be 2 $\mu$m to 6 $\mu$m.

The first adhesive layer 12 can be obtained, for example, by applying a composition containing the components mentioned above. The coating method may be a known coating method, e.g., gravure direct coating, gravure reverse (direct, kiss) coating, and micro gravure coating.

The composition may contain a solvent. Examples of such a solvent include ethyl acetate, toluene, methyl ethyl ketone, methyl isobutyl ketone, and alcohols. These solvents can be used singly or in combination of two or more.

(Second adhesive layer 15)

The second adhesive layer 15 adheres the barrier layer 13 provided with the anticorrosion treatment layer 14b to the sealant layer 16.

The adhesive component forming the second adhesive layer 15 may be, for example, components which are similar to the components mentioned for the first adhesive layer 12.

The second adhesive layer 15 is preferred to contain a hydrogen sulfide adsorbent which is able to suppress corrosion of the barrier layer 13 caused by hydrogen sulfide that is produced from the battery contents inside the packaging material. Such a hydrogen sulfide adsorbent may be those which are mentioned for the first adhesive layer 12. The content thereof is preferred to be 0.1 to 50 mass% with respect to the total mass of the second adhesive layer 15.

The second adhesive layer 15 can be obtained using a method similar to the method mentioned for the first adhesive layer 12.

The second adhesive layer 15 is preferred to have a thickness of 1 $\mu$m to 5 $\mu$m. If the thickness of the second adhesive layer 15 is 1 $\mu$m or more, an adhesive strength sufficient for bonding between the barrier layer 13 and the sealant layer 16 can be easily achieved. If the thickness of the second adhesive layer 15 is 5 $\mu$m or less, cracking occurring in the second adhesive layer 15 tends to be suppressed.

If the first and second adhesive layers 12 and 15 contain a urethane compound or urea compound, and when a peak intensity of infrared absorption spectrum at 1,700 to 1,800 cm$^{-1}$ measured using infrared spectroscopy is represented by A, and a peak intensity of infrared absorption spectrum at 1,600 to 1,660 cm$^{-1}$ measured using infrared spectroscopy is represented by B, a value X that can be defined by the following Formula (1) is preferred to satisfy a relationship $0.1 \leq X \leq 7.0$ and, from the perspective of further improving initial adhesion, heat resistance, deep drawability, and forming reliability, is more preferred to satisfy a relationship $1.5 \leq X \leq 4.5$, and is even more preferred to satisfy a relationship $2.5 \leq X \leq 3.5$.

$$X = \{B/(A+B)\} \times 100 \qquad \ldots (1)$$

The peak intensity of infrared absorption spectrum can be measured utilizing attenuated total reflection (ATR) from Fourier transform infrared (FT-IR) spectroscopy.

When the number of hydroxyl groups contained in the polyol resin is represented by C, the number of isocyanate groups contained in the polyfunctional isocyanate compound is represented by D, and the number of nitrogen atoms contained in the amine compound or amine derivative and reacting with isocyanate groups to establish urea bonds is represented by E, a value Y defined by the following Formula (2) is preferred to satisfy a relationship $5.0 < Y < 60$, and a value Z defined by the following Formula (3), is preferred to satisfy a relationship $0.1 \leq Z \leq 10.0$.

$$Y = D/C \qquad \ldots (2)$$

$$Z = E/(D-C) \qquad \ldots (3)$$

Examples of the nitrogen atoms contained in the amine compound or the amine derivative and reacting with isocyanate groups to establish urea bonds include the nitrogen atoms contained in amino groups represented by $-NH_2$, the nitrogen atoms contained in amino groups represented by -NHR, and one nitrogen atom contained in imidazole groups that contributes to reaction. If the latent curing agent is an amine compound or an amine derivative, the nitrogen atoms reacting with isocyanate groups and establishing urea bonds may also include the nitrogen atoms establishing urea bonds by reaction with isocyanate groups by being activated by external stimuli.

The value Y defined by Formula (2) is preferred to exceed 10, more preferred to be less than 50, and is even more preferred to be less than 40 because, with this range, the packaging material may be further improved in initial adhesion, heat resistance, and forming reliability.

The value Z defined by Formula (3) is preferred to be 0.5 or more, more preferred to be 2.0 or more, and even more preferred to be 3.5 or more because, with this range, the packaging material may be further improved in initial adhesion, heat resistance, and forming reliability.

The first and second adhesive layers 12 and 15 may both contain a urethane compound or urea compound, or only one of them may contain a urethane compound or urea compound. From the perspective of heat resistance, it is preferred that the first and second adhesive layers 12 and 15 both contain a urethane compound or urea compound.

<Barrier layer 13>

The barrier layer 13 has water vapor barrier properties for preventing entry of moisture into the power storage device. Also, the barrier layer 13 has ductility for undergoing deep drawing. Examples of the material that can be used for the barrier layer 13 include various metal foils such as of aluminum, stainless steel, and copper, metal deposited films, inorganic oxide deposited films, carbon-containing inorganic oxide deposited films, and films provided with these deposited films. Examples of the films provided with a deposited film include aluminum deposited films and inorganic oxide deposited films. These films can be used singly or in combination of two or more. The barrier layer 13 is preferred to be formed of a metal foil, and is more preferred to be formed of an aluminum foil, from the perspective of mass (specific gravity), moisture resistance, processability, and cost.

The aluminum foil is preferred to be a soft aluminum foil, particularly an aluminum foil subjected to an annealing treatment, from the perspective of imparting desired ductility for forming. An aluminum foil containing iron is more preferred to be used for the purpose of further imparting pinhole resistance and ductility for forming. The content of iron in the aluminum foil is preferred to be 0.1 to 9.0 mass% with respect to 100 mass% aluminum foil, and is more preferred to be 0.5 to 2.0 mass% (e.g., aluminum foil made of the material 8021 or 8079 according to the Japanese Industrial Standards). If the iron content is 0.1 mass% or more, a packaging material 10 having even higher pinhole resistance and ductility can be obtained. If the iron content is 9.0 mass% or less, a packaging material 10 having even higher flexibility can be obtained.

The metal foil used for the barrier layer 13 is preferred to be degreased, for example, to obtain desired electrolyte resistance. To simplify the production process, the metal foil is preferred to have an unetched surface. From the perspective of imparting electrolyte resistance, the metal foil used for the barrier layer 13 is preferred to be a degreased aluminum foil. When degreasing the aluminum foil, only one surface may be degreased, or both surfaces may be degreased. The degreasing treatment, for example, may be of a wet type or dry type. However, from the perspective of simplifying the production process, a dry type degreasing treatment is preferred.

The dry type degreasing treatment may include, for example, a method in which degreasing is performed by extending the treatment time in the process of annealing the metal foil. Adequate electrolyte resistance may be achieved even with a degreasing treatment that is carried out simultaneously with the annealing treatment for softening the metal foil.

The dry type degreasing treatment may be a flame treatment, corona treatment, or the like, other than the annealing treatment. Furthermore, the dry type degreasing treatment may be a treatment, for example, in which contaminants are oxidatively decomposed and removed using active oxygen generated by irradiating the metal foil with ultraviolet rays at a specific wavelength.

Examples of the wet type degreasing treatment include an acid degreasing treatment, and alkaline degreasing treatment. Examples of the acid used for the acid degreasing treatment include inorganic acids such as sulfuric acid, nitric acid, hydrochloric acid, and hydrofluoric acid. These acids may be used singly or in combination of two or more. Examples of the alkali used for the alkaline degreasing treatment include sodium hydroxide having strong etching effects. The alkaline degreasing treatment may be performed using a material containing a weak alkaline material, or a material mixed with a surfactant or the like. The wet type degreasing treatment can be performed, for example, using immersion or spraying.

From the perspective of barrier properties, pinhole resistance, and processability, the thickness of the barrier layer 13 is preferred to be 9 $\mu$m to 200 $\mu$m, more preferred to be 15 $\mu$m to 150 $\mu$m, and even more preferred to be 15 $\mu$m to 100 $\mu$m. A barrier layer 13 with a thickness of 9 $\mu$m or more can make the layer less fragile even when a stress is applied thereto during forming. A barrier layer 13 with a thickness of 200 $\mu$m or less can suppress increase in mass of the packaging material and can suppress decrease in weight energy density of the power storage device.

<Anticorrosion treatment layers 14a and 14b>

The first and second anticorrosion treatment layers 14a and 14b are provided on the respective surfaces of the barrier layer 13 to prevent corrosion of the thin metal layer and the like forming the barrier layer 13. The anticorrosion treatment layer 14a increases adhesion between the barrier layer 13 and the first adhesive layer 12. The anticorrosion treatment layer 14b increases adhesion between the barrier layer 13 and the second adhesive layer 15. The anticorrosion treatment layers 14a and 14b may have the same configuration, or may have different configurations. In the present embodiment, an anticorrosion treatment layer is provided between the barrier layer 13 and the first adhesive layer 12 and between the barrier layer 13 and the second adhesive layer 15; however, an anticorrosion treatment layer may be provided only between the barrier layer 13 and the second adhesive layer 15.

The anticorrosion treatment layers 14a and 14b can be formed by, for example, performing a degreasing treatment, hydrothermal conversion treatment, anodizing treatment, chemical conversion treatment, coating-type anticorrosion treatment of applying a coating agent having anticorrosion ability, or combinations of these treatments, for layers serving as base materials of the anticorrosion treatment layers 14a and 14b.

Of the treatments mentioned above, the degreasing treatment, hydrothermal conversion treatment, and anodizing treatment, particularly the hydrothermal conversion treatment and anodizing treatment, are treatments for dissolving surfaces of metal foils (aluminum foils) using a treatment agent, and for forming metal compounds having good anticorrosion properties (aluminum compounds (boehmite, alumite)). Therefore, these treatments may be embraced within the definition of chemical conversion treatments because they provide a co-continuous structure that is formed covering from the barrier layer 13 to the anticorrosion treatment layers 14a and 14b.

The degreasing treatment may be an acid degreasing treatment, or alkaline degreasing treatment. The acid degreasing treatment may be a treatment using inorganic acids such as sulfuric acid, nitric acid, hydrochloric acid, and hydrofluoric acid mentioned above, singly, or using acids obtained by selectively mixing them. Use of an acid degreasing agent, as the acid degreasing treatment, obtained by dissolving a fluorine-containing compound, such as monosodium ammonium difluoride, with the above inorganic acids can not only exert the effects of degreasing the barrier layer 13, but also form a passive-state metal fluoride, and is thus effective in terms of hydrofluoric acid resistance. The alkaline degreasing may be a method using sodium hydroxide or the like.

The hydrothermal conversion treatment may be, for example, a boehmite treatment using boehmite obtained by immersing the barrier layer 13 in boiling water to which triethanolamine is added. The anodizing treatment may be, for example, an alumite treatment. Examples of the chemical conversion treatment mentioned above include a chromate treatment, zirconium treatment, titanium treatment, vanadium treatment, molybdenum treatment, calcium phosphate treatment, strontium hydroxide treatment, cerium treatment, ruthenium treatment, and a treatment that is a combination of two or more of these treatments. When performing the hydrothermal conversion treatment, anodizing treatment, or chemical conversion treatment, the degreasing treatment described above is preferred to be performed in advance.

The chemical conversion treatment is not limited to a wet type, but may be a treatment, for example, in which agents used for these treatments are mixed with a resin component and coated. The anticorrosion treatment is preferred to be of a coating type chromate treatment because it maximizes the anticorrosion effect and is convenient for liquid waste disposal.

The coating agent used in the coating type anticorrosion treatment may be those which contain at least one material selected from the group consisting of rare earth element oxide sols, anionic polymers, and cationic polymers. In particular, a method using a coating agent containing a rare earth element oxide sol is preferred.

The anticorrosion treatment layers 14a and 14b are preferred to have a mass per unit area in the range of 0.005 to 0.200 $g/m^2$, and more preferably 0.010 to 0.100 $g/m^2$. With 0.005 $g/m^2$ or more, the barrier layer 13 can be easily made corrosion-resistant. If the mass per unit area exceeds 0.200 $g/m^2$, no further effect can be expected due to the corrosion resistance being already saturated. Although the mass per unit area has been used in the above description, the specific gravity, if available, can be used to convert the thickness therefrom.

From the perspective of corrosion resistance and anchoring, the anticorrosion treatment layers 14a and 14b are each preferred to have a thickness of, for example, 10 nm to 5 $\mu$m, and more preferably 20 nm to 500 nm.

<Sealant layer 16>

The sealant layer 16, which imparts sealing properties to the packaging material 10 by heat sealing, is disposed on the inside and heat sealed (thermally adhered) when the power storage device is assembled.

Examples of the sealant layer 16 include films made of acrylic resins, polyolefin resins, and polyester resins. The sealant layer 16 is preferred to be a film made of a polyolefin resin or polyester resin, and is more preferred to be a film made of a polyester resin, because these materials have a high melting point and further improve heat resistance of the packaging material to be obtained.

Examples of the acrylic resins include polymethyl methacrylate (PMMA) resins. These acrylic resins may be used singly or in combination of two or more.

Examples of the polyolefin resins include: low-, medium- and high-density polyethylenes; ethylene-$\alpha$ olefin copolymers; polypropylenes; and propylene-$\alpha$ olefin copolymers. The polyolefin resins in the form of copolymers may be block copolymers or may be random copolymers.

Examples of the polyester resins include polyethylene terephthalate (PET), and polybutylene terephthalate (PBT). These polyester resins may be used singly or in combination of two or more.

The sealant layer 16 may be a single-layer film or may be a multilayer film, and may be selected according to the required properties. If the sealant layer 16 is a film of a multilayer structure, the layers may be laminated using coextrusion, or may be laminated using dry lamination.

The sealant layer 16 may contain various additives, such as flame retardants, slip agents, anti-blocking agents, antioxidants, light stabilizers, and tackifiers.

It is preferred that the thickness of the sealant layer 16 is 10 $\mu$m to 100 $\mu$m, and is more preferred to be 20 $\mu$m to 60 $\mu$m. If the thickness of the sealant layer 16 is 10 $\mu$m or more, an adequate heat seal strength can be achieved, and if it is 100 $\mu$m or less, the amount of water vapor penetrating from the edges of the packaging material can be reduced.

The peak melting temperature of the sealant layer 16 is preferred to be 200 to 280°C from the perspective of improving heat resistance.

[Method for producing packaging material]

A method of producing the packaging material 10 will be described. The method of producing the packaging material 10 should not be limited to the method described below.

For example, the method of producing the packaging material 10 may be a method in which the following steps S11 to S13 are performed in this order.

Step S 11: Forming an anticorrosion treatment layer 14a on a surface of a barrier layer 13 and forming an anticorrosion treatment layer 14b on the other surface of the barrier layer 13.

Step S12: Bonding a surface of the anticorrosion treatment layer 14a facing away from the barrier layer 13 to a substrate layer 11 via a first adhesive layer 12.

Step S13: Forming a sealant layer 16 on a surface of the anticorrosion treatment layer 14b facing away from the barrier layer 13 via a second adhesive layer 15.

<Step S11>

At step S11, an anticorrosion treatment layer 14a is formed on a surface of a barrier layer 13 and an anticorrosion treatment layer 14b is formed on the other surface of the barrier layer 13. The anticorrosion treatment layers 14a and 14b may be formed separately or simultaneously. Specifically, for example, the anticorrosion treatment layers 14a and 14b may be simultaneously formed by applying an anticorrosion treatment agent (base material of the anticorrosion treatment layers) to both sides of the barrier layer 13, sequentially followed by drying, curing, and baking. Alternatively, an anticorrosion treatment agent may be applied to a surface of the barrier layer 13, sequentially followed by drying, curing, and baking to form an anticorrosion treatment layer 14a, and then an anticorrosion treatment layer 14b may be similarly formed on the other surface of the barrier layer 13. The order of forming the anticorrosion treatment layers 14a and 14b is not particularly limited. The anticorrosion treatment agent may be different or the same between the anticorrosion treatment layers 14a and 14b. Examples of the method of applying the anticorrosion treatment agent include, but are not particularly limited to, gravure coating, gravure reverse coating, roll coating, reverse roll coating, die coating, bar coating, kiss coating, comma coating, and small-diameter gravure coating.

<Step S12>

At step S12, a surface of the anticorrosion treatment layer 14a facing away from the surface provided with the barrier layer 13 is bonded to the substrate layer 11 by dry lamination or the like using an adhesive for forming a first adhesive layer 12. At step S12, heat treatment may be performed to accelerate adhesion of the first adhesive layer 12. The temperature of the heat treatment is preferred to be 140°C or less, at which the packaging material will have good curl resistance when formed.

<Step S13>

Following step S12, of the laminate having the substrate layer 11, first adhesive layer 12, anticorrosion treatment layer 14a, barrier layer 13, and anticorrosion treatment layer 14b which are laminated in this order, a surface of the anticorrosion treatment layer 14b facing away from the surface provided with the barrier layer 13 is bonded to the sealant layer 16 by dry lamination or the like using an adhesive for forming a second adhesive layer 15. At step S13, heat treatment may be performed to accelerate adhesion of the second adhesive layer 15. The temperature of the heat treatment is preferred to be 140°C or less, and is more preferred to be 120°C or less, at which the packaging material will have good curl resistance when formed.
Through steps S11 to S13 described above, a packaging material 10 is obtained. The order of steps in the method of producing the packaging material 10 is not limited to the order in which the above steps S11 to S13 are sequentially performed. The order of steps may be appropriately changed, e.g., step S12 may be followed by step S11.

[Power storage device]

Next, a power storage device provided with the packaging material 10 as a container will be described. The power storage device includes a battery element 1 including electrodes, leads 2 extending from the electrodes, and a container holding the battery element 1. The container is formed of the packaging material 10 for a power storage device, with the sealant layer 16 located on the interior side. The container may be obtained by overlapping two sheets of packaging materials, with the sealant layers 16 being located face-to-face, and heat-sealing the edge portions of the overlapped packaging materials 10, or may be obtained by folding a single sheet of packaging material so that surfaces of the packaging material are overlapped with each other, and similarly heat-sealing the edge portions of the packaging material 10. The leads 2 are sandwiched and hermetically sealed between surfaces of the packaging material(s) 10 forming the container with the sealant layer(s) 16 located on the interior side. The leads 2 may be sandwiched between surfaces of the packaging material(s) 10 via respective tab sealants.
The packaging material of the present embodiment can be used for various power storage devices. Examples of such power storage devices include secondary batteries such as lithium ion batteries, nickel hydride batteries, and lead batteries, and electrochemical capacitors such as electric double layer capacitors. The packaging material 10 of the present embodiment, which can maintain good heat sealability even when used under high temperature conditions after being heat-sealed, is suitably applied to solid-state batteries which are expected to be used in such an environment.

[Method of producing power storage device]

Next, a method of producing a power storage device using the packaging material 10 will be described. The following description is given taking as an example the case of producing a secondary battery 40 using an embossed packaging material 30. Fig. 2 is a set of diagrams each illustrating the embossed packaging material 30. Fig. 3 is a set of diagrams (a) to (d), each being a perspective view illustrating a process of producing a single-sided battery using the packaging material 10. The secondary battery 40 may be a double-sided battery produced by preparing two packaging materials, such as the embossed packaging materials 30, and bonding them to each other with the alignment adjusted.
The secondary battery 40 as a single-sided battery can be produced, for example, through the following steps S21 to S26.
Step S21: Preparing a packaging material 10, battery element 1 including electrodes, and leads 2 extending from the respective electrodes.

Step S22: Forming a recess 32 for arranging the battery element 1 by shaping a part of the packaging material 10 to obtain an embossed packaging material 30 (see Figs. 3(a) and 3(b)).

Step S23: Arranging the battery element 1 in the shaped area (recess 32) of the embossed packaging material 30, folding back the embossed packaging material 30, with surfaces thereof being overlapped, to cover the recess 32 with a cover portion 34, and heat-sealing one side of the embossed packaging material 30 so as to sandwich the leads 2 extending from the battery element 1 (see Figs. 3(b) and 3(c)).

Step S24: Heat-sealing another side, leaving a side other than the side sandwiching the leads 2 unsealed, followed by injecting an electrolyte from the unsealed side and heat-sealing the unsealed side in a vacuum (see Fig. 3 (c)).

Step S25: Performing charging and discharging while setting the current, voltage, environmental temperature, etc., to predetermined values to induce chemical changes (chemical conversion).

Step S26: Trimming the edge portions of the heat-sealed sides except for the side sandwiching the leads 2, and bending the edge portions toward the shaped area (recess 32) (see Fig. 3 (d)).

<Step S21>

At step S21, a packaging material 10, battery element 1 including electrodes, and leads 2 extending from the electrodes are prepared. The packaging material 10 is prepared based on the embodiment described above. The battery element 1 and the leads 2 are not particularly limited, but a known battery element 1 and known leads 2 may be used.

<Step S22>

At step S22, a recess 32 for arranging the battery element 1 is formed by shaping the sealant layer 16 side of the packaging material 10. The recess 32 has a shape, such as a rectangular shape in plan view, conforming to the shape of the battery element 1. The recess 32 is formed, for example, by pressing a pressing member having a rectangular pressing surface against part of the packaging material 10 in the thickness direction thereof. The position to be pressed, i.e., the position where the recess 32 is formed, is deviated toward one edge portion of the packaging material 10 in the longitudinal direction from the center of the packaging material 10 cut in a rectangle. Thus, the other edge portion having no recess 32 is folded back after forming to provide a cover (cover portion 34).

More specifically, the method of forming the recess 32 may be a method using a die (deep drawing). The forming method may be a method that uses a negative die and a positive die arranged with a gap equal to or greater than the thickness of the packaging material 10 therebetween, such that the positive die is pressed into the negative die together with the packaging material 10. By adjusting pressure exerted by the positive die, the depth (deep drawing degree) of the recess 32 can be adjusted as desired. With the recess 32 being formed in the packaging material 10, an embossed packaging material 30 is obtained. The embossed packaging material 30 has a shape, for example, as shown in Fig. 2. Fig. 2(a) is a perspective view illustrating the embossed packaging material 30, and Fig. 2(b) is a vertical cross-sectional view illustrating the embossed packaging material 30 of Fig. 2(a) taken along the line b-b.

<Step S23>

At step S23, the battery element 1 which is configured by a cathode, separator, anode, etc. is arranged in the shaped area (recess 32) of the embossed packaging material 30. The leads 2 extending from the battery element 1 and respectively joined to the cathode and the anode are drawn out of the shaped area (recess 32). The embossed packaging material 30 is then folded back at the approximate center thereof in the longitudinal direction so that surfaces of the sealant layer 16 are overlapped with each other and located on the inside, followed by heat-sealing the side of the embossed packaging material 30 sandwiching the leads 2. Heat sealing is controlled by three conditions of temperature, pressure, and time, which are appropriately determined. The heat-sealing temperature is preferred to be equal to or higher than the melting temperature of the sealant layer 16 and, specifically, is preferred to be 180°C or more.

Heat sealing is followed by curing in which the sealant layer 16 as a whole is further heated. Thus, crystallization in portions other than the heat-sealed portion is accelerated so that heat resistance of the packaging material 10 as a whole is ensured. Curing can be performed at a temperature of 80 to 150°C.

The thickness of the sealant layer 16 before being heat-sealed is preferred to be 40% or more and 80% or less of the thickness of the leads 2. If the thickness of the sealant layer 16 is equal to or greater than the above lower limit, the resin forming the sealant layer 16 tends to be able to adequately fill the end portions of the leads 2 and, if it is equal to or smaller than the above upper limit, the thickness of the edge portions of the packaging material 10 of the secondary battery 40 can be appropriately suppressed and the amount of moisture penetrating the packaging material 10 from the edge portions can be reduced.

<Step S24>

At step S24, another side is heat-sealed, leaving one side other than the side sandwiching the leads 2 unsealed. After that, an electrolyte is injected from the unsealed side which is then heat-sealed in a vacuum. The heat-sealing conditions are similar to those of step S23.

<Step S25>

At step S25, the secondary battery 40 obtained up to step S23 is charged and discharged to induce chemical changes (chemical conversion: for 3 days in 40°C environment). Then, the secondary battery 40 is temporarily opened to remove the gas generated by the chemical conversion and to refill the electrolyte, and then, the secondary battery 40 is finally sealed. Step S25 can be omitted.

<Step S26>

The edge portions of the heat-sealed sides except for the side sandwiching the leads 2 are trimmed to remove the sealant layer 16 squeezed out of the edge portions. Then, the heat-sealed portions are turned up toward the shaped area 32 to form turn-up portions 42, thereby obtaining a secondary battery 40.

Preferred embodiments of the packaging material for a power storage device of the present disclosure have been described in detail so far. However, the present disclosure is not limited to these embodiments.

Examples

The present disclosure will be described in detail based on examples; however, the present disclosure should not be limited to these examples.

[Materials used]

Materials used in examples and comparative example are shown below.

<Substrate layer (thickness: 25 $\mu$m)>

A polyethylene terephthalate film corona-treated on one surface was used.

<First adhesive layer (thickness: 4 $\mu$m)>

Adhesives in each of which a polyol resin, polyfunctional isocyanate compound, amine compound or amine derivative, and ethyl acetate were blended at the ratios shown in Table 1 were used. The following are details of the polyol resins, polyfunctional isocyanate compounds, and amine compounds or amine derivatives shown in Table 1.

{Polyol resins}

Polyacrylic polyol (percentage of non-volatile content: 50 mass%, hydroxyl value: 10 to 20 KOH mg/g, functional equivalent: 5,610 g/mol, manufactured by Mitsubishi Rayon Co., Ltd., grade name: LR209)
Polycarbonate diol (percentage of non-volatile content: 100 mass%, hydroxyl value: 113 KOH mg/g, functional equivalent: 496 g/mol, manufactured by Asahi Kasei Corporation, grade name: T5652)
Polyester polyol (percentage of non-volatile content: 30 mass%, hydroxyl value: 4 KOH mg/g, functional equivalent: 14,025 g/mol, manufactured by Unitika, Ltd., grade name: ELITEL UE-3600)

{Polyfunctional isocyanate Compounds}

HDI-adduct (hexamethylene diisocyanate-adduct, percentage of non-volatile content: 50 mass%, NCO content: 18.7 mass%, functional equivalent: 225 g/mol, manufactured by Asahi Kasei Corporation, grade name: E402-80B)
TDI-adduct (tolylene diisocyanate-adduct, percentage of non-volatile content: 50 mass%, NCO content: 17.7 mass%, functional equivalent: 237 g/mol, manufactured by Nippon Polyurethane Corporation, grade name: CORONATE L)
IPDI-adduct (isophorone diisocyanate-adduct, percentage of non-volatile content: 74.6 mass%, NCO content: 10.3 mass%, functional equivalent: 408 g/mol, manufactured by Mitsui Chemicals Inc., grade name: D-140N)

{Amine compounds or amine derivatives}

Secondary amine compound (amine compound, percentage of non-volatile content: 100 mass%, functional equivalent: 626 g/mol, manufactured by Koei Chemical Co., Ltd., grade name: A3190)
Imidazole curing agent (amine derivative, heat-activated latent curing agent, percentage of non-volatile content: 100 mass%, functional equivalent: 701 g/mol, manufactured by Mitsubishi Chemical Corporation, amine value: 80 KOH mg/g, grade name: P200H50)
Imine curing agent (amine derivative, moisture-activated latent curing agent, percentage of non-volatile content: 100 mass%, functional equivalent: 6,233 g/mol, manufactured by Mitsubishi Chemical Corporation, amine value: 9 KOH mg/g, grade name: H3)

<Second adhesive layer (thickness: 3 $\mu$m)>

An acid-modified polyolefin resin (manufactured by Nippon Paper Industries Co., Ltd., trade name: Auroren 150S) was used as a second adhesive layer.

<Barrier layer (thickness: 35 $\mu$m)>

An annealed and degreased soft aluminum foil (8079 Material manufactured by Toyo Aluminum K.K.) was used.

<Sealant layer (thickness: 30 $\mu$m)>

An unstretched polypropylene film (trade name: P1011, manufactured by Toyobo Co., Ltd.) was used as a sealant layer.

[Preparation of packaging materials]

(Examples 1 to 18 and Comparative Examples 1 to 3)

Using a dry lamination method, the barrier layer was bonded to the substrate layer using an adhesive (first adhesive layer), followed by aging at 80°C for 120 hours. Next, using a dry lamination method, the sealant layer was bonded to a surface of the barrier layer facing away from the surface to which the first adhesive layer was bonded, using an adhesive (second adhesive layer), followed by aging at 60°C for 120 hours.

Each laminate obtained in this way was subjected to heat treatment to prepare a packaging material (substrate layer / first adhesive layer / barrier layer / second adhesive layer / sealant layer).

[Evaluation of packaging materials]

(Examples 1 to 18 and Comparative Examples 1 to 3)

{Measurement of infrared absorption spectrum peak}

Each packaging material was cut to shape and the substrate layer was peeled off from the barrier layer. An infrared absorption spectrum peak was measured for the outermost surface of the adhesive layer exposed on the surface of either of the substrate layer and the barrier layer, utilizing attenuated total reflection (ATR) from Fourier transform infrared (FT-IR) spectroscopy. With A representing a peak intensity of infrared absorption spectrum at 1,700 to 1,800 cm$^{-1}$, and with B representing a peak intensity of infrared absorption spectrum at 1,600 to 1,660 cm$^{-1}$, a value X was calculated from the following Formula (1). The results are shown in Table 2.

$$X=\{B/(A+B)\}\times 100 \qquad \ldots (1)$$

Details of the measuring device and conditions are as follows.

(Measuring device and conditions)

Measuring device: Spectrum Spotlight 400 (trade name) manufactured by PerkinElmer
Prism: germanium
Wavenumber resolution: 4 cm$^{-1}$
Number of times of integration: 4
Base line: Straight section in wavenumber range of 2,500 to 2,700 cm$^{-1}$

{Evaluation of lamination strength}

(Measuring method)

Each packaging material was cut to a width of 15 mm, and the lamination strength between the barrier layer and the substrate layer of the packaging material was measured. The measurement was performed at 25°C (room temperature) or at 160°C. In the case of performing the measurement at 160°C, the cut packaging material was heated at 160°C for 5 minutes and then the lamination strength was measured in the 160°C environment. Peeling was performed at an angle of 90° and a speed of 50 mm/min. The lamination strengths were evaluated based on the following evaluation criteria according to the measurement temperatures, and packaging materials evaluated to be C or higher were determined to be above the pass level. The results are shown in Table 2.

(Evaluation criteria in the case of 25°C environment)

A: Lamination strength was 6.0 N/15 mm or more.
B: Lamination strength was 4.5 N/15 mm or more and less than 6.0 N/15 mm.
C: Lamination strength was 3.0 N/15 mm or more and less than 4.5 N/15 mm.
D: Lamination strength was less than 3.0 N/15 mm.

(Evaluation criteria in the case of 160°C environment)

A: Lamination strength was 3.0 N/15 mm or more.
B: Lamination strength was 2.0 N/15 mm or more and less than 3.0 N/15 mm.
C: Lamination strength was 1.0 N/15 mm or more and less than 2.0 N/15 mm.
D: Lamination strength was less than 1.0 N/15 mm.

{Evaluation for deep drawability}

For the packaging materials obtained in the examples and the comparative examples, the forming depth of deep drawing was evaluated by the following method. The forming depth of the forming device was set in a range of 3.00 mm to 7.00 mm with 0.25 mm increments, and a maximum forming depth at which the packaging material was deep-drawn causing neither damage nor pinholes was obtained. The deep-drawn samples of the packaging materials were visually examined as to the presence of damage or pinholes by applying light thereto. The forming depths were evaluated according to the following criteria. Level C or more was taken to be a pass. The results are shown in Table 2.

(Evaluation criteria)

A: The maximum forming depth was 5.75 mm or more.
B: The maximum forming depth was 5.00 mm or more and less than 5.75 mm.
C: The maximum forming depth was 4.25 mm or more and less than 5.00 mm.

D: The maximum forming depth was less than 4.25 mm.

[Evaluation for forming reliability]

Packaging materials with a forming depth of 2.00 mm (5 samples each) obtained in the item {Evaluation for deep drawability} were left to stand in a 160°C environment for 1 week. After that, these samples were examined as to the occurrence of delamination between the substrate layer and the barrier layer. The occurrence of delamination was visually examined by applying light to the vicinity of the convexly shaped portion. The occurrence of delamination was evaluated according to the following criteria. Level C or more was taken to be a pass. The results are shown in Table 2.

(Evaluation criteria)

B: Delamination occurred in 0 to 1 sample among 5 samples.
C: Delamination occurred in 2 to 3 samples among 5 samples.
D: Delamination occurred in 4 or more samples among 5 samples.

[Pot life]

Pot life was evaluated from the gel fraction of each adhesive coating liquid per predetermined time. The gel fraction was measured according to the following method. The gel fraction was evaluated according to the following criteria. Level C or more was taken to be a pass. The results are shown in Table 2.

(Measuring method)

Step A: A sample of each prepared adhesive coating liquid was recovered after being left for 4 hours, and a solvent of the coating liquid was dried.
Step B: The weight of a mesh for placing a sample thereon was measured (w1), and a total weight of the mesh with the dried coating film of step A placed thereon was measured (w2).
Step C: The dried coating film of step A was immersed in xylene and left to stand at room temperature for 1 week.
Step D: The xylene solution of step C was filtered with the mesh used at step B, and the residue was washed with a large amount of xylene.
Step E: The residue of step D was dried and the weight was measured (w3).
Step F: A gel fraction was calculated from the weight data obtained at the above steps, using the following formula.

$$\text{Gel fraction} = (w3-w1)/(w2-w1)$$

(Evaluation criteria)

A: The gel fraction was less than 40%.
B: The gel fraction was 40% or more and less than 50%.
C: The gel fraction was 50% or more and less than 60%.
D: The gel fraction was 60% or more.

{Overall evaluation}

Each packaging material was evaluated according to the following criteria. The results are shown in Table 2.

A: Evaluations for lamination strength heat resistance, deep drawability, forming reliability, and pot life were all at level B or more.
B: Evaluations for lamination strength heat resistance, deep drawability, forming reliability, and pot life were all at level C or more, including at least one level C and at least one level B.

C: Evaluations for lamination strength heat resistance, deep drawability, forming reliability, and pot life were all at level C.

D: Evaluations for lamination strength heat resistance, deep drawability, forming reliability, and pot life include at least one level D.

[Table 1]

| | Type of material used | | | Blending ratio of material used (mass part) | | | | | | |
|---|---|---|---|---|---|---|---|---|---|---|
| | Polyol resin | Polyfunctional isocyanate compound | Amine compound or amine derivative | Polyol resin | Polyfunctional isocyanate compound | Amine compound or amine derivative | Ethyl acetate | X | Y | Z |
| Ex. 1 | Polyacrylic polyol | HDI-adduct | Secondary amine compound | 100 | 4.80 | 0.000134 | 97 | 0.1 | 1.2 | 1.0 |
| Ex. 2 | Polyacrylic polyol | HDI-adduct | Secondary amine compound | 100 | 280 | 1.21 | 354 | 3.1 | 70.0 | 0.5 |
| Ex. 3 | Polyacrylic polyol | HDI-adduct | Secondary amine compound | 100 | 280 | 2.69 | 359 | 7.0 | 70.0 | 1.0 |
| Comp. Ex. 1 | Polyacrylic polyol | HDI-adduct | None | 100 | 4.80 | - | 97 | 0.0 | 1.2 | 0.0 |
| Comp. Ex. 2 | Polyacrylic polyol | HDI-adduct | Secondary amine compound | 100 | 300 | 3.10 | 378 | 7.4 | 75.0 | 1.0 |
| Comp. Ex. 3 | Polyacrylic polyol | HDI-adduct | Secondary amine compound | - | 100 | 0.02 | 92 | 100 | - | 1.0 |
| Ex. 4 | Polyacrylic polyol | HDI-adduct | Imidazole curing agent | 100 | 280 | 1.36 | 355 | 3.1 | 70.0 | 0.5 |
| Ex. 5 | Polyacrylic polyol | HDI-adduct | Imine curing agent | 100 | 280 | 12.08 | 385 | 3.1 | 70.0 | 0.5 |
| Ex. 6 | Polyacrylic polyol | HDI-adduct | Imine curing agent | 100 | 28 | 0.12 | 119 | 0.8 | 7.0 | 0.5 |
| Ex. 7 | Polyacrylic polyol | HDI-adduct | Imine curing agent | 100 | 100 | 1.67 | 189 | 1.6 | 25.0 | 0.5 |
| Ex. 8 | Polyacrylic polyol | HDI-adduct | Imine curing agent | 100 | 200 | 6.81 | 296 | 2.5 | 50.0 | 0.5 |
| Ex. 9 | Polyacrylic polyol | HDI-adduct | Imine curing agent | 100 | 100 | 0.33 | 186 | 0.3 | 25.0 | 0.1 |
| Ex. 10 | Polyacrylic polyol | HDI-adduct | Imine curing agent | 100 | 100 | 3.33 | 194 | 3.1 | 25.0 | 1.0 |
| Ex. 11 | Polyacrylic polyol | HDI-adduct | Imine curing agent | 100 | 100 | 16.67 | 232 | 3.1 | 25.0 | 5.0 |
| Ex. 12 | Polyacrylic polyol | HDI-adduct | Imine curing agent | 100 | 100 | 33.33 | 180 | 3.1 | 25 | 10.0 |
| Ex. 13 | Polyacrylic polyol | HDI-adduct | Imine curing agent | 100 | 100 | 0.17 | 185 | 0.2 | 25.0 | 0.05 |
| Ex. 14 | Polyacrylic polyol | HDI-adduct | Imine curing agent | 100 | 100 | 36.67 | 289 | 3.1 | 25.0 | 11.0 |
| Ex. 15 | Polycarbonate diol | HDI-adduct | Imine curing agent | 100 | 2,262 | 376.67 | 3,252 | 3.1 | 25.0 | 5.0 |
| Ex. 16 | Polyester polyol | HDI-adduct | Imine curing agent | 100 | 24.0 | 4.00 | 126 | 3.1 | 25.0 | 5.0 |
| Ex. 17 | Polyester polyol | TDI-adduct | Imine curing agent | 100 | 25.4 | 4.23 | 128 | 3.1 | 25.0 | 5.0 |
| Ex. 18 | Polyester polyol | IPDI-adduct | Imine curing agent | 100 | 29.2 | 4.87 | 161 | 3.1 | 25.0 | 5.0 |

[Table 2]

| | Lamination strength | | | | Deep drawability | | Forming reliability | | Pot life | Overall evaluation |
|---|---|---|---|---|---|---|---|---|---|---|
| | Room temperature environment | | 160°C environment | | | | | | | |
| | Measured value (N/15 mm) | Evaluation | Measured value (N/15 mm) | Evaluation | Measured value (mm) | Evaluation | Number of times of delamination occurred | Evaluation | | |
| Ex. 1 | 3.80 | C | 1.40 | C | 4.25 | C | 3 | C | C | C |
| Ex. 2 | 4.30 | C | 1.80 | C | 4.75 | C | 2 | C | C | C |
| Ex. 3 | 3.40 | C | 1.60 | C | 4.50 | C | 3 | C | C | C |
| Comp. Ex. 1 | 3.20 | C | 0.10 | D | 3.75 | D | 5 | D | A | D |
| Comp. Ex. 2 | 2.60 | D | 1.20 | C | 3.75 | D | 3 | C | C | D |
| Comp. Ex. 3 | 2.10 | D | 1.00 | C | 3.00 | D | 3 | C | C | D |
| Ex. 4 | 4.20 | C | 1.80 | C | 4.75 | C | 2 | C | B | B |
| Ex. 5 | 4.40 | C | 1.90 | C | 4.75 | C | 2 | C | A | B |
| Ex. 6 | 5.10 | B | 2.10 | B | 4.50 | C | 1 | B | A | B |
| Ex. 7 | 5.80 | B | 2.50 | B | 4.75 | C | 0 | B | A | B |
| Ex. 8 | 4.70 | B | 2.20 | B | 4.50 | C | 1 | B | A | B |
| Ex. 9 | 5.50 | B | 2.30 | B | 4.50 | C | 1 | B | A | B |
| Ex. 10 | 5.80 | B | 2.50 | B | 4.75 | C | 0 | B | A | B |
| Ex. 11 | 5.90 | B | 2.80 | B | 4.75 | C | 0 | B | A | B |
| Ex. 12 | 5.70 | B | 2.40 | B | 4.75 | C | 0 | B | A | B |
| Ex. 13 | 5.10 | C | 1.60 | C | 4.50 | C | 2 | C | A | B |
| Ex. 14 | 4.10 | C | 1.40 | C | 4.25 | C | 2 | C | A | B |
| Ex. 15 | 5.50 | B | 3.00 | A | 5.25 | B | 0 | B | A | A |
| Ex. 16 | 5.90 | B | 3.40 | A | 5.50 | B | 0 | B | A | A |
| Ex. 17 | 7.10 | A | 3.80 | A | 5.75 | A | 0 | B | A | A |
| Ex. 18 | 7.60 | A | 4.10 | A | 5.75 | A | 0 | B | A | A |

[Reference Signs List]

| 1 | Battery element |
|---|---|
| 2 | Lead |
| 10 | Packaging material (packaging material for power storage device) |
| 11 | Substrate layer |
| 12 | First adhesive layer |
| 13 | Barrier layer |
| 14a, 14b | Anticorrosion treatment layer |
| 15 | Second adhesive layer |
| 16 | Sealant layer |
| 30 | Embossed packaging material |
| 32 | Shaped area (recess) |
| 34 | Cover portion |
| 40 | Secondary battery |

**Claims**

1. A packaging material (10) for a power storage device, comprising a laminate structure that includes

    a substrate layer (11),
    a first adhesive layer (12),
    a barrier layer (13),
    a second adhesive layer (15), and
    a sealant layer (16), in this order,

    wherein

    at least one of the first adhesive layer (12) and the second adhesive layer (15) contains a urethane compound or a urea compound;
    the urethane compound is a reaction product of a polyol resin with a polyfunctional isocyanate compound; and
    the urea compound is a reaction product of a polyfunctional isocyanate compound with at least one of an amine compound and an amine derivative;
    **characterized in that**
    in a layer containing the urethane compound or the urea compound among the first adhesive layer (12) and the second adhesive layer (15), when a peak intensity of infrared absorption spectrum at 1,700 to 1,800 cm$^{-1}$ measured using infrared spectroscopy is represented by A, and a peak intensity of infrared absorption spectrum at 1,600 to 1,660 cm$^{-1}$ measured using infrared spectroscopy is represented by B, a value X that is defined by the following Formula (1) satisfies a relationship $0.1 \leq X \leq 7.0$

$$X = \{B/(A+B)\} \times 100 \qquad \ldots (1)$$

2. The packaging material (10) for a storage device according to claim 1, wherein the amine compound or the amine derivative contains a latent curing agent.

3. The packaging material (10) for a storage device according to claim 1 or 2, wherein

    when the number of hydroxyl groups contained in the polyol resin is represented by C,
    the number of isocyanate groups contained in the polyfunctional isocyanate compound is represented by D, and
    the number of nitrogen atoms contained in the amine compound or the amine derivative and reacting with isocyanate groups to establish urea bonds is represented by E,
    a value Y defined by the following Formula (2) satisfies a relationship $5.0 < Y < 60$, and a value Z defined by the following Formula (3) satisfies a relationship $0.1 \leq Z \leq 10.0$.

$$Y=D/C \qquad\qquad ... (2)$$

$$Z=E/(D-C) \qquad\qquad ... (3)$$

4. The packaging material (10) for a power storage device according to any one of claims 1 to 3, wherein the polyol resin is at least one polyol selected from a group consisting of polyester polyols and polycarbonate diols.

5. The packaging material (10) for a power storage device according to any one of claims 1 to 4, wherein the polyfunctional isocyanate compound is at least one material selected from a group consisting of multimers of alicyclic polyfunctional isocyanate compounds and multimers of polyfunctional isocyanate compounds with aromatic rings.

6. A use of the packaging material (10) for a power storage device according to any one of claims 1 to 5 in a solid-state battery.

**Patentansprüche**

1. Verpackungsmaterial (10) für eine Energiespeichervorrichtung, die eine Laminatstruktur umfasst, die

eine Substratschicht (11),
eine erste Klebeschicht (12),
eine Barriereschicht (13),
eine zweite Klebeschicht (15) und
eine Abdichtschicht (16) in dieser Reihenfolge einschließt, wobei
mindestens eine von der ersten Klebeschicht (12) und der zweiten Klebeschicht (15) eine Urethanverbindung oder eine Harnstoffverbindung enthält;
die Urethanverbindung ein Reaktionsprodukt eines Polyolharzes mit einer polyfunktionellen Isocyanatverbindung ist; und
die Harnstoffverbindung ein Reaktionsprodukt einer polyfunktionellen Isocyanatverbindung mit mindestens einem von einer Aminverbindung und einem Aminderivat ist;
**dadurch gekennzeichnet, dass**
in einer Schicht von der ersten Klebeschicht (12) und der zweiten Klebeschicht (15), die die Urethanverbindung oder die Harnstoffverbindung enthält, wenn eine Peakintensität des Infrarotabsorptionsspektrums bei 1.700 bis 1.800 cm$^{-1}$, gemessen unter Verwendung der Infrarotspektroskopie, durch A wiedergegeben wird, und eine Peakintensität des Infrarotabsorptionsspektrums bei 1.600 bis 1.660 cm$^{-1}$, gemessen unter Verwendung der Infrarotspektroskopie, durch B wiedergegeben wird, ein Wert X, der durch die folgende Formel (1) definiert ist, eine Beziehung 0,1≤X≤7,0 erfüllt

$$X=\{B/(A+B)\}\times 100 \qquad\qquad ...(1)$$

2. Verpackungsmaterial (10) für eine Energiespeichervorrichtung gemäß Anspruch 1, in dem die Aminverbindung oder das Aminderivat einen latenten Härter enthält.

3. Verpackungsmaterial (10) für eine Energiespeichervorrichtung gemäß Anspruch 1 oder 2, in dem,

wenn die Zahl von Hydroxylgruppen, die in dem Polyolharz enthalten sind, durch C wiedergegeben wird,
die Zahl von Isocyanatgruppen, die in der polyfunktionellen Isocyanatverbindung enthalten sind, durch D wiedergegeben wird und
die Zahl von Stickstoffatomen, die in der Aminverbindung oder dem Aminderivat enthalten sind und mit Isocyanatgruppen reagieren, um Harnstoffbindungen zu bilden, durch E wiedergegeben wird, ein durch die folgende Formel (2) definierter Wert Y einen Zusammenhang 5,0<Y<60 erfüllt und ein durch die folgende Formel (3) definierter Wert Z einen Zusammenhang 0,1≤Z≤10,0 erfüllt

$$Y=D/C \qquad\qquad ...(2)$$

$$Z=E/(D-C) \qquad \dots (3)$$

**4.** Verpackungsmaterial (10) für eine Energiespeichervorrichtung gemäß mindestens einem der Ansprüche 1 bis 3, in dem das Polyolharz mindestens ein Polyol ist, ausgewählt aus einer Gruppe, bestehend aus Polyestpolyolen und Polycarbonatdiolen.

**5.** Verpackungsmaterial (10) für eine Energiespeichervorrichtung gemäß mindestens einem der Ansprüche 1 bis 4, in dem die polyfunktionelle Isocyanatverbindung mindestens ein Material ist, ausgewählt aus einer Gruppe, bestehend aus Multimeren alicyclischer polyfunktioneller Isocyanatverbindungen und Multimeren polyfunktioneller Isocyanatverbindungen mit aromatischen Ringen.

**6.** Verwendung des Verpackungsmaterials (10) für eine Energiespeichervorrichtung gemäß mindestens einem der Ansprüche 1 bis 5 in einer Feststoffbatterie.

**Revendications**

**1.** Matériau extérieur (10) pour un dispositif de stockage d'énergie, comprenant une structure stratifiée qui inclut

> une couche de substrat (11),
> une première couche adhésive (12),
> une couche barrière (13),
> une deuxième couche adhésive (15), et
> une couche d'étanchéité (16), dans cet ordre,

dans lequel

> au moins une parmi la première couche adhésive (12) et la deuxième couche adhésive (15) contient un composé d'uréthane ou un composé d'urée ;
> le composé d'uréthane est un produit de réaction d'une résine de polyol avec un composé d'isocyanate polyfonctionnel ; et
> le composé d'urée est un produit de réaction d'un composé d'isocyanate polyfonctionnel avec au moins l'un parmi un composé à base d'amine et un dérivé d'amine ;
> **caractérisé en ce que**
> dans une couche contenant le composé d'uréthane ou le composé d'urée entre la première couche adhésive (12) et la deuxième couche adhésive (15), lorsqu'une intensité de pic du spectre d'absorption infrarouge à 1 700 à 1 800 cm$^{-1}$ mesurée en utilisant la spectroscopie infrarouge est représentée par A, et qu'une intensité de pic du spectre d'absorption infrarouge à 1 600 à 1 660 cm$^{-1}$ mesurée en utilisant la spectroscopie infrarouge est représentée par B, une valeur X qui est définie par la formule (1) suivante satisfait à une relation $0,1 \leq X \leq 7,0$

$$X = \{B/(A + B)\} \times 100 \qquad \dots (1)$$

**2.** Matériau extérieur (10) pour un dispositif de stockage selon la revendication 1, dans lequel le composé à base d'amine ou le dérivé d'amine contient un agent de durcissement latent.

**3.** Matériau extérieur (10) pour un dispositif de stockage selon la revendication 1 ou la revendication 2, dans lequel

> lorsque le nombre de groupes hydroxyle contenus dans la résine de polyol est représenté par C,
> le nombre de groupes isocyanate contenus dans le composé d'isocyanate polyfonctionnel est représenté par D, et
> le nombre d'atomes d'azote contenus dans le composé à base d'amine ou le dérivé d'amine et réagissant avec des groupes isocyanate pour établir des liaisons d'urée est représenté par E,
> une valeur Y définie par la formule (2) suivante satisfait à une relation $5,0 < Y < 60$, et une valeur Z définie par la formule (3) suivante satisfait à une relation $0,1 \leq Z \leq 10,0$.

$$Y = D/C \qquad \dots (2)$$

$$Z = E/(D-C) \qquad \ldots (3)$$

4. Matériau extérieur (10) pour un dispositif de stockage d'énergie selon l'une quelconque des revendications 1 à 3, dans lequel la résine de polyol est au moins un polyol sélectionné parmi un groupe consistant en polyols de polyester et diols de polycarbonate.

5. Matériau extérieur (10) pour un dispositif de stockage d'énergie selon l'une quelconque des revendications 1 à 4, dans lequel le composé d'isocyanate polyfonctionnel est au moins un matériau sélectionné parmi un groupe consistant en des multimères de composés d'isocyanate polyfonctionnels alicycliques et des multimères de composés d'isocyanate polyfonctionnels avec des cycles aromatiques.

6. Utilisation du matériau extérieur (10) pour un dispositif de stockage d'énergie selon l'une quelconque des revendications 1 à 5 dans une batterie solide.

FIG.1

# FIG.2

(a)

(b)

# FIG.3

(a)

(b)

(c)

(d)

**EP 4 362 175 B1**

**REFERENCES CITED IN THE DESCRIPTION**

**Patent documents cited in the description**

- JP 2013101765 A
- KR 20160130240 A
- EP 3116044 A1